# EUROPÄISCHE PATENTANMELDUNG

(11) **EP 1 088 715 A2**
(43) Veröffentlichungstag der Anmeldung: **04.04.2001**
(21) Anmeldenummer: 00119394.5
(22) Anmeldetag: 12.09.2000
(51) Int. Cl.: B60R 25/04

(54) **Kraftfahrzeug mit einer Bordelektronik**

(30) Priorität: 01.10.1999 DE 19947310
(71) Anmelder: Volkswagen Aktiengesellschaft, 38436 Wolfsburg (DE)
(72) Erfinder: Dietzel, Klaus, Dipl.-Ing., 38112 Braunschweig (DE)

(57) **Zusammenfassung**

Die Erfindung betrifft ein Kraftfahrzeug mit einer Bordelektronik-Einrichtung, welches sich dadurch auszeichnet, daß die Bordelektronik-Einrichtung eine Empfängerschaltung für die von einem Mobil-Telefongerät ausgesendeten Signale aufweist, und daß mit der Empfängerschaltung eine Treiber-Schaltung verbunden ist, durch welche ein vorgebbares Aggregat des Kraftfahrzeugs ansteuerbar ist.

## Beschreibung

Die Erfindung betrifft ein Kraftfahrzeug mit einer Bordelektronik.

Es sind allgemein Funk- und IR-Fernbedienungseinrichtungen bekannt, welche eigenständige Systeme zur Betätigung von Kraftfahrzeugfunktionen aufweisen. Solche Systeme erfordern die Entwicklung und die Herstellung von speziellen Schaltungen und Geräten, welche die jeweils gewünschte Funktion ausüben können.

Der Erfindung liegt die **Aufgabe** zugrunde, ein Kraftfahrzeug mit einer Bordelektronik zu schaffen, bei welchem verschiedene, vielseitig vorgebbare Funktionen über eine Fernbedienung besonders einfach und bequem ausgelöst werden können und dazu der gerätetechnische Aufwand für die Fernbedienungseinrichtung außerordentlich gering gehalten wird.

Zur Lösung dieser Aufgabe sieht die Erfindung vor, daß die Bordelektronik-Einrichtung eine Empfängerschaltung für die von einem Mobil-Telefongerät ausgesendeten Signale aufweist, und daß mit der Empfängerschaltung eine Treiber-Schaltung verbunden ist, durch welche ein vorgebbares Aggregat des Kraftfahrzeugs ansteuerbar ist.

Gemäß der Erfindung ist der wesentliche Vorteil erreichbar, daß ein normales handelsübliches Mobil-Telefongerät als Fahrzeugschlüssel ebenso wie zur Betätigung verschiedener Fahrzeugaggregate auf dem Wege einer Fernbedienung verwendet werden kann.

Gemäß der Erfindung wird weiterhin die Möglichkeit eröffnet, praktisch beliebig viele Funktionen zur Betätigung von auswählbaren Fahrzeugaggregaten vom Mobil-Telefongerät auszuüben.

Eine besonders vorteilhafte Ausführungsform der Erfindung zeichnet sich dadurch aus, daß die Empfängerschaltung als autonomes Standard-Mobil-Telefongerät ausgebildet ist. Durch die Verwendung eines in großen Stückzahlen hergestellten handelsüblichen Gerätes ergibt sich eine wirtschaftlich und technisch besonders attraktive Lösung, weil auf diese Weise auch die Zuverlässigkeit eines in großen Stückzahlen hergestellten und bewährten technischen Gerätes genutzt werden kann.

In einer alternativen bevorzugten Ausführungsform der Erfindung kann vorgesehen sein, daß die Empfängerschaltung in ein Radio-/Audio-/Navigations-System integriert ist. Dabei können ohnehin in einem Kraftfahrzeug vorhandene Schaltungen sinnvoll genutzt werden, und es kann vorzugsweise vorgesehen sein, die Treiber-Schaltung mit einem Positionsmelder zum Aussenden eines Signals zu verbinden, welches die geographische Fahrzeugposition angibt. Bei dieser Ausführungsform der Erfindung ergibt sich der Vorteil, daß über ein handelsübliches Mobil-Telefongerät der jeweilige Standort eines Kraftfahrzeuges abgefragt und ermittelt werden kann. Diese Möglichkeit kann beispielsweise dann praktische Bedeutung gewinnen, wenn einem Benutzer des Kraftfahrzeuges nicht mehr genau in Erinnerung ist, wo er sein Fahrzeug abgestellt hat. Auch in solchen Fällen, in denen bestimmte Kraftfahrzeuge nur in vorgegebenen Bereichen unterwegs sein sollen, läßt sich bei dieser Ausführungsform der Erfindung leicht eine zuverlässige Überwachung durchführen. Es sind auch vielseitige weitere praktische Fälle denkbar, in denen die aktuelle Position eines bestimmten Kraftfahrzeuges festgestellt werden soll. Schließlich kann auch bei einem Diebstahl ein eventuell abhanden gekommenes Kraftfahrzeug geortet und wieder sichergestellt werden.

Vorteilhafterweise kann auch vorgesehen sein, daß die Empfängerschaltung als eigenständige Spezialschaltung ausgelegt ist, welche nur für den Empfang von Signalen eines Mobilfunk-Telefongerätes ausgebildet ist. Bei einer solchen Einrichtung kann eine relativ einfach aufgebaute Schaltung entwickelt und verwendet werden, so daß der gerätetechnische Aufwand insgesamt relativ gering ist.

Gemäß einer vorteilhaften Weiterbildung der Erfindung kann vorgesehen sein, daß die Treiber-Schaltung mit einer elektromechanischen Einrichtung zur Betätigung einer Türverriegelungs-Einrichtung verbunden ist. Dabei kann nicht nur auf äußerst bequeme Weise eine Kraftfahrzeugtür geöffnet und/oder geschlossen werden, es kann vielmehr auch von einem praktisch beliebigen Ort aus überprüft werden, ob ein Kraftfahrzeug ordnungsgemäß verschlossen und verriegelt ist.

Vorzugsweise kann auch vorgesehen sein, daß die Treiber-Schaltung mit einer Kofferraumdeckel-Verriegelungseinrichtung verbunden ist. Diese Ausführungsform ermöglicht zu dem oben bereits erwähnten Vorteil weiterhin die Möglichkeit, auch während der Fahrt von den Insassen des Kraftfahrzeugs eine Verriegelung des Kofferraums vorzunehmen. Dies erscheint insbesondere unter solchen Umständen sehr zweckmäßig, unter denen die Gefahr besteht, daß ein unbefugter Zugriff von außen auf den Inhalt des Kofferraums zu befürchten ist.

Gemäß einer weitereren Ausgestaltung der Erfindung kann die Anordnung auch so getroffen sein, daß die Treiber-Schaltung mit einer Einrichtung zum Einschalten und Ausschalten einer Fahrzeugheizung verbunden ist. In manchen Fällen kann es nämlich erwünscht sein, auch über eine größere Entfernung rechtzeitig vor der Benutzung eines Kraftfahrzeugs die Fahrzeugheizung einzuschalten.

Weiterhin kann vorzugsweise auch vorgesehen sein, daß die Treiber-Schaltung mit einer Einrichtung zum Auslösen einer Alarmanlage verbunden ist. Es versteht sich, daß manche Fälle denkbar und realistisch sind, in denen die Auslösung einer Kraftfahrzeugalarmanlage von einem beliebigen Ort aus oder auch aus dem Inneren des Kraftfahrzeuges heraus eine höchst wünschenswerte Rettung in einer gefährlichen Situation sein kann.

Weiterhin kann eine besonders vorteilhafte Weiterbildung der Erfindung dann bestehen, daß die Treiber-Schaltung mit einer Einrichtung zum Betätigen einer Diebstahlsperre verbunden ist. Damit kann ein wesentlicher Beitrag dazu geleistet werden, einen Diebstahl eines Kraftfahrzeuges zu unterbinden.

Schließlich kann vorteilhafterweise die praktische Realisierung der Erfindung auch so durchgeführt werden, daß die Treiber-Schaltung mit einer Einrichtung zum Einschalten und Ausschalten einer Fahrzeugbeleuchtung verbunden ist. Eine solche Möglichkeit kann beispielsweise dann sinnvoll genutzt werden, wenn ein Kraftfahrzeug tagsüber bei ausreichender Beleuchtung geparkt wird und nach dem Eintritt der Dunkelheit keine ausreichende Beleuchtung dieses Kraftfahrzeuges mehr gewährleistet ist. Schließlich kann auf diese Weise auch das Auffinden eines abgestellten Kraftfahrzeuges bei Nacht erleichtert werden.

Ferner ist es möglich, daß mittels Spracheingabe eine Ansteuerung der Treiber-Schaltung erfolgt, so daß die Befehle 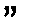 Tür auf" einfacher ausgeführt werden können. Vorzugsweise könnte über die Sprache auch noch eine Identifikation geschehen, so daß nicht jeder zugriff auf das Kraftfahrzeug hat, wobei diese Identifikation auch noch per Codeeingabe überbrückt werden kann, so daß z.B. bei Erkältungen auch noch ein sicheres Öffnen gewährleistet ist

Neben der Bedienung von einem Mobiltelefon ist es auch möglich von einem herkömmlichen Telefon oder einem Computer aus eine Ansteuerung des Kraftfahrzeug zu ermöglichen.

Eine Ansteuereinheit zum Ansteuern eines Kraftfahrzeuges ist vorzugsweise mit einer Codesicherung ausgestattet, so daß nicht jeder das Kraftfahrzeug bedienen kann. Die Codesicherung kann durch eine Karte, die man in das Telefon einlegen kann, durch eine selbst bestimmbare Ton oder Tastatur Reihenfolge oder durch ansonsten bekannte Sicherungsmaßnahmen erfolgen, die in die Ansteuereinheit integriert oder vorgeschaltet werden.

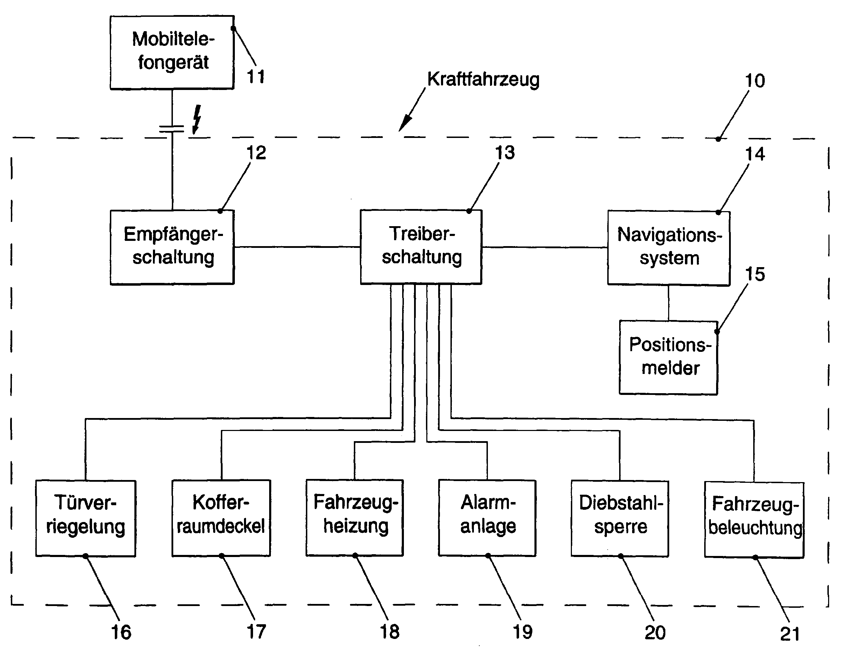

Die Erfindung wird nachfolgend beispielsweise anhand der Zeichnung beschrieben; in dieser zeigt die einzige Figur ein Blockschaltbild einer besonders bevorzugten Ausführungsform der Erfindung.

Gemäß der Erfindung ist ein insgesamt mit 10 bezeichnetes Kraftfahrzeug über ein Mobil-Telefongerät 11 aus einer praktisch beliebigen Entfernung durch ein Funksignal ansprechbar. Das Kraftfahrzeug ist mit einer Empfängerschaltung 12 ausgestattet, der eine Treiber-Schaltung 13 nachgeschaltet ist.

An die Treiber-Schaltung ist ein Navigationssystem 14 angeschlossen, welches mit einem Positionsmelder 15 verbunden ist. Mit einer derartigen Anordnung wird die Möglichkeit eröffnet, von einem beliebigen Ort aus über ein Mobil-Telefongerät den aktuellen Standort eines Kraftfahrzeuges zu ermitteln. Wenn nämlich über das Mobil-Telefongerät 11 die Empfängerschaltung im Kraftfahrzeug 10 angesprochen wird, kann über die Treiber-Schaltung 13 und das Navigationssystem 14 der Positionsmelder 15 aktiviert werden, so daß dieser Positionsmelder 15 ein Funksignal aussendet, welches von dem Mobil-Telefongerät 11 empfangen wird.

In Abweichung von der in der Zeichnung veranschaulichten Ausführungsform kann alternativ die Anordnung auch so getroffen sein, daß anstatt einer speziellen Empfängerschaltung ein in das Navigationssystem integrierter Empfänger angesteuert wird. Es kann dann von diesem Empfänger aus eine Treiber-Schaltung beaufschlagt werden, welche auswählbare und vorgebbare Aggregate im Kraftfahrzeug ansteuert und betätigt.

Bei dem in der Zeichnung veranschaulichten Ausführungsbeispiel der Erfindung sind an die Treiberschaltung 13 verschiedene Fahrzeugaggregate angeschlossen, nämlich eine Türverriegelung 16, ein Kofferraumdeckel 17, eine Fahrzeugheizung 18, eine Alarmanlage 19, eine Diebstahlsperre 20 und eine Fahrzeugbeleuchtung 21. Es können entweder sämtliche erwähnte Aggregate oder auch nur eine vorgebbare Auswahl solcher Aggregate vorgesehen sein.

Es ist eine Frage des technischen und finanziellen Aufwandes, welcher Komfort bereitgestellt werden soll. Es hängt auch von dem Verwendungszweck eines Kraftfahrzeuges ab, welche der genannten Aggregate 16 bis 21 zweckmäßigerweise vorgesehen werden sollen.

Es wird beispielsweise die Einschaltung einer Fahrzeugheizung 18 nur für solche Fahrzeuge von Interesse sein, die in einer Gegend benutzt werden, in welcher eine Fahrzeugheizung wegen niedriger Außentemperaturen zweckmäßig erscheint.

Es versteht sich, daß die gerätetechnische Realisierung der Erfindung auf bekannte Einrichtungen gestützt werden kann, die keiner weiteren Erläuterung bedürfen. Es versteht sich weiterhin, daß die praktische Realisierung des Erfindungsgedankens nicht auf solche Mobil-Telefongeräte und andere technische Geräte beschränkt ist, die heute bereits auf dem Markt zur Verfügung stehen; es können zur praktischen Ausführung der Erfindung vielmehr in Zukunft auch neu entwickelte Geräte zum Einsatz kommen, die weitere Anwendungsmöglichkeiten und/oder Vorteile in der technischen Ausgestaltung eines Kraftfahrzeuges ermöglichen.

### BEZUGSZEICHENLISTE

- 10: Kraftfahrzeug
- 11: Mobil-Telefongerät
- 12: Empfängerschaltung
- 13: Treiber-Schaltung
- 14: Navigationssystem
- 15: Positionsmelder
- 16: Türverriegelung
- 17: Kofferraumdeckel
- 18: Fahrzeugheizung
- 19: Alarmanlage
- 20: Diebstahlsperre
- 21: Fahrzeugbeleuchtung

## Patentansprüche

1. Kraftfahrzeug (10) mit einer Bordelektronik-Einrichtung, **dadurch gekennzeichnet**, daß die Bordelektronik-Einrichtung eine Empfängerschaltung (12) für die von einem Mobil-Telefongerät (11) ausgesendeten Signale aufweist, und daß mit der Empfängerschaltung (12) eine Treiber-Schaltung (13) verbunden ist, durch welche ein vorgebbares Aggregat (16-21) des Kraftfahrzeugs (10) ansteuerbar ist.

2. Kraftfahrzeug nach Anspruch 1, **dadurch gekennzeichnet**, daß die Empfängerschaltung (12) als autonomes Standard-Mobil-Telefongerät ausgebildet ist.

3. Kraftfahrzeug nach Anspruch 1, **dadurch gekennzeichnet**, daß die Empfängerschaltung (12) in ein Radio-/Audio-/Navigations-System (14) integriert ist.

4. Kraftfahrzeug nach Anspruch 3, **dadurch gekennzeichnet**, daß die Treiber-Schaltung (13) mit einem Positionsmelder (15) zum Aussenden eines Signals verbunden ist, welches die geographische Fahrzeugposition angibt.

5. Kraftfahrzeug nach Anspruch 1, **dadurch gekennzeichnet**, daß die Empfängerschaltung (12) als eigenständige Spezialschaltung ausgelegt ist, welche nur für den Empfang von Signalen eines Mobilfunk-Telefongerätes (11) ausgebildet ist.

6. Kraftfahrzeug nach einem der vorhergehenden Ansprüche, **dadurch gekennzeichnet**, daß die Treiber-Schaltung (13) mit einer elektromechanischen Einrichtung zur Betätigung einer Türverriegelungs-Einrichtung (16) verbunden ist.

7. Kraftfahrzeug nach einem der vorhergehenden Ansprüche, **dadurch gekennzeichnet**, daß die Treiber-Schaltung (13) mit einer Kofferraumdeckel-Verriegelungseinrichtung (17) verbunden ist.

8. Kraftfahrzeug nach einem der vorhergehenden Ansprüche, **dadurch gekennzeichnet**, daß die Treiber-Schaltung (13) mit einer Einrichtung zum Einschalten und Ausschalten einer Fahrzeugheizung (18) verbunden ist.

9. Kraftfahrzeug nach einem der vorhergehenden Ansprüche, **dadurch gekennzeichnet**, daß die Treiber-Schaltung (13) mit einer Einrichtung zum Auslösen einer Alarmanlage (19) verbunden ist.

10. Kraftfahrzeug nach einem der vorhergehenden Ansprüche, **dadurch gekennzeichnet**, daß die Treiber-Schaltung (13) mit einer Einrichtung zum Betätigen einer Diebstahlsperre (20) verbunden ist.

11. Kraftfahrzeug nach einem der vorhergehenden Ansprüche, **dadurch gekennzeichnet**, daß die Treiber-Schaltung (13) mit einer Einrichtung zum Einschalten und Ausschalten einer Fahrzeugbeleuchtung (21) verbunden ist.

12. Kraftfahrzeug nach einem der vorhergehenden Ansprüche, **dadurch gekennzeichnet**, daß mittels Spracheingabe eine Ansteuerung der Treiber-Schaltung (13) erfolgt.

13. Kraftfahrzeug nach einem der vorhergehenden Ansprüche, **dadurch gekennzeichnet**, daß von einem Telefongerät eine Ansteuerung der Treiber-Schaltung erfolgt.

14. Kraftfahrzeug nach einem der vorhergehenden Ansprüche, **dadurch gekennzeichnet**, daß von einem Computer eine Ansteuerung der Treiber-Schaltung erfolgt.

15. Ansteuereinheit zum Ansteuern eines Kraftfahrzeuges nach Anspruch 1, **dadurch gekennzeichnet**, daß die Ansteuereinheit eine Codesicherung aufweist.
